# FASCICULE DE BREVET EUROPEEN

(11) **EP 0 430 781 B1**
(45) Date de publication et mention de la délivrance du brevet: **11.01.1995**
(21) Numéro de dépôt: 90403323.0
(22) Date de dépôt: 23.11.1990
(51) Int. Cl.: C03B 37/027, C03B 37/012, C03B 37/026

(54) **Procédé de réalisation d'une fibre optique creuse**
Verfahren zur Herstellung einer optischen Hohlfaser
Process for producing a hollow optical fibre

(30) Priorité: 01.12.1989 FR 8915872
(43) Date de publication de la demande: 05.06.1991
(73) Titulaire: THOMSON-CSF, 75008 Paris (FR)
(72) Inventeur: Turpin, Marc, F-92045 Paris la Défense (FR); Le Pesant, Jean-Pierre, F-92045 Paris la Défense (FR)
(74) Mandataire: Guérin, Michel

(56) Documents cités:
- EP-A- 0 198 761
- EP-A- 0 249 886
- DE-A- 2 516 387
- US-A- 2 608 722
- US-A- 3 792 985
- PATENT ABSTRACTS OF JAPAN, vol. 8, no. 205 (C-243)[1642], 19 septembre 1984; & JP-A-59 092 940 (FURUKAWA DENKI KOGYO K.K.) 29-05-1984
- PATENT ABSTRACTS OF JAPAN, vol. 8, no. 138 (C-231)[1575], 27 juin 1984; & JP-A-59 050 044 (SUMITOMO DENKI KOGYO K.K.) 22-03-1984
- PATENT ABSTRACTS OF JAPAN, vol. 8, no. 138 (C-231)[1575], 27 juin 1984; & JP-A-59 050 043 (SUMITOMO DENKI KOGYO K.K.) 22-03-1984
- PATENT ABSTRACTS OF JAPAN, vol. 13, no. 417 (C-636)[3765], 14 septembre 1989; & JP-A-01 153 551 (SUMITOMO ELECTRIC IND. LTD) 15-06-1989
- PATENT ABSTRACTS OF JAPAN, vol. 10, no. 36 (C-328)[2093], 13 février 1986; & JP-A-60 186 432 (SUMITOMO DENKI KOGYO K.K.) 21-09-1985

## Description

L'invention concerne un procédé de réalisation d'une fibre optique creuse.

Plus particulièrement, l'invention concerne des modes de réalisation de fibres optiques spécifiques destinées à des applications particulières dans le domaine des capteurs à fibre optique.

Ces fibres optiques permettent de véhiculer des informations optiques suivant le mode de fonctionnement usuel des fibres optiques monomodes et possèdent une structure interne qui favorise leur sensibilité à des grandeurs physiques telles que la pression, la tension et le champ électrique.

D'une manière générale et suivant l'invention, la fibre optique présente une structure interne anisotrope.

De part et d'autre du coeur de guidage, deux évidements sont réalisés suivant une méthode de réalisation particulièrement propre à l'invention.

Suivant un premier mode de réalisation, la fibre optique à structure évidée (FASE), est utilisée comme capteur intrinsèque de pression. Dans un tel capteur la fibre doit présenter une structure homogène sur une grande longueur (plusieurs centaines de mètres).

L'invention décrit un mode de réalisation particulier et une méthode de contrôle nécessaire à l'obtention de grandes longueurs de fibre homogène.

Suivant un second mode de réalisation, on décrit une méthode d'obtention de fibres optiques à canaux conducteurs.

Dans les deux évidements de la fibre FASE sont placés des éléments conducteurs tels que des fils métalliques, qui sont insérés dans la fibre au cours de l'opération de fibrage selon une variante appropriée, conformément à l'invention, par rapport à la méthode connue de l'homme de l'art.

Ce type de fibre optique peut être utilisé pour de nombreuses applications, en particulier dans le domaine des capteurs à libre optique et/ou optique intégrée. A titre d'exemple non limitatif, une telle structure peut être avantageusement utilisée peur tirer parti des propriétés de l'effet Kerr électrique. Il est connu de l'homme de l'art qu'une fibre optique de grande longueur peut être conditionnée dans un faible volume, ce qui associé à la faible atténuation du signal lumineux, permet d'amplifier par cumul de l'effet sur une grande longueur, un faible effet ou un faible coefficient de transducteur.

Le document JP-A-59 092 940 décrit un procédé comportant les caractéristiques du préambule de la revendication indépendante 1 de la présente invention.

L'invention concerne donc un procédé de réalisation de fibre optique creuse comportant les étapes suivantes :
- une étape de réalisation d'une préforme possédant un axe de symétrie, deux extrémités, un coeur optique ainsi qu'au moins un évidement dont l'axe est parallèle à l'axe de symétrie de la préforme ;
- une étape d'étirage à une température permettant le ramollissement de la partie étirée de la préforme, de façon à obtenir une fibre optique creuse ;
- une étape de fixation de manière étanche, à une extrémité de la préforme, d'une enceinte creuse dont la cavité communique également avec un dispositif de régulation pneumatique ;
- l'étape d'étirage comportant une régulation pneumatique du gaz contenu dans la cavité et dans l'évidement à l'aide du dispositif de régulation pneumatique ;
   caractérisé en ce qu'il comporte également une étape de fixation, à l'autre extrémité de la préforme, d'une amorce en matériau de même température de fusion que la préforme et obturant à cette extrémité l'évidement cylindrique, le dispositif de régulation pneumatique étant un dispositif de régulation de pression, la régulation pneumatique étant alors une régulation de la pression du gaz contenu dans la cavité et dans l'évidement à l'aide du dispositif de régulation de pression.

Les différents objets et caractéristiques de l'invention apparaîtront plus clairement dans la description qui va suivre faite principalement en se reportant aux figures annexées qui représentent :
- les figures 1a à 2b, des exemples de réalisation de préformes pour fabrication d'une fibre optique ;
- la figure 3, un exemple de dispositif mettant en oeuvre l'invention ;

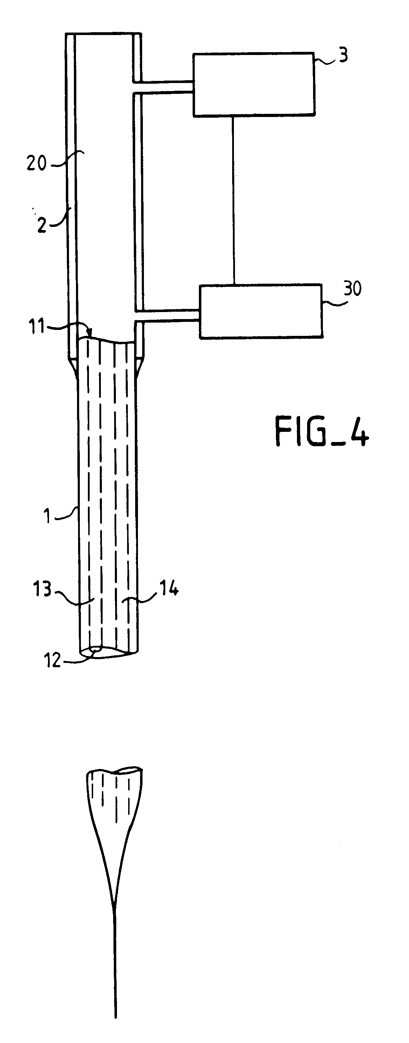

- la figure 4, le dispositif de la figure 3 en cours de fibrage ;
- la figure 5, une variante d'un dispositif de l'invention permettant la réalisation de fibres contenant des fils conducteurs.

En fonction des paramètres usuels propres aux fibres optiques, diamètre, longueur, longueur d'onde de coupure, diamètre de mode ..., on fabrique une préforme (barreau de grandes dimensions à partir duquel est étirée la fibre optique) suivant un quelconque des procédés parfaitement connus de l'homme de l'art, par exemple MCVD (Epitaxie en phase vapeur d'organométalliques), OVD (Outside Vapor Deposition), PVD (Epitaxie en phase vapeur par Plasma), VAD (Epitaxie axiale en phase vapeur).

La préforme réalisée est ensuite usinée mécaniquement selon une géométrie particulière en utilisant des procédés classiques d'usinage. La forme ainsi que les dimensions des usinages sont étudiées pour obtenir dans la fibre optique des évidements dont la taille et la position relative au coeur 10 de guidage sont adaptées à l'application.

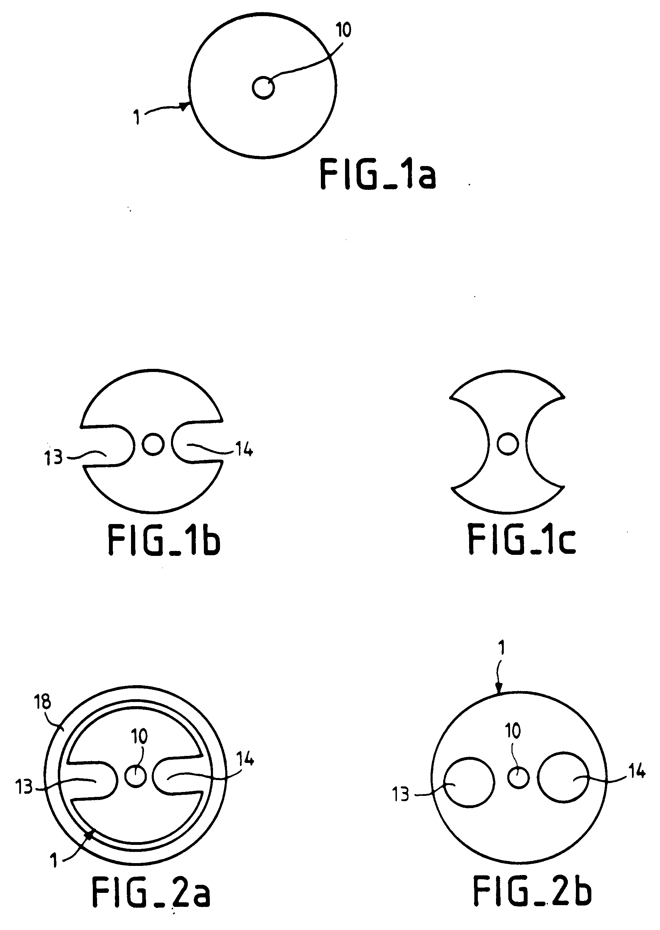

La figure 1a représente la section droite d'une préforme 1 avant usinage.

Les figures 1b et 1c représentent la section droite de la préforme après usinage. Deux types d'usinage 13, 14 sont représentés à titre d'exemple.

Pour obtenir une structure quasi homothétique de la fibre recherchée entre la fibre et la préforme, il faut refermer la structure pour obtenir deux évidements à l'intérieur de la préforme. La préforme usinée 1 avec rainures latérales 13, 14 est manchonnée avec un tube 18 de silice de diamètre intérieur légèrement supérieur au diamètre de ladite préforme, comme cela est représenté en figure 2a. Le tube est ensuite retreint sur la partie interne usinée, suivant la technique usuelle de retreint à la flamme utilisée dans la technique MCVD par exemple.

A ce stade de réalisation, on dispose d'une nouvelle préforme fibrable dont une représentation schématique est donnée figure 2b.

Le choix des dimensions relatives de la préforme usinée et du tube ainsi que les conditions de retreint (puissance de chauffe, contrôle de pression interne), est déterminant pour obtenir une pré-recircularisation de la nouvelle préforme, en particulier au niveau des évidements.

Le fibrage de la préforme est effectué sur une tour de fibrage classique, comportant les appareils et moyens de contrôle usuels.

Selon l'invention, on prévoit des dispositions particulières de régulation de la pression à l'intérieur de la préforme, pour assurer un fibrage homogène, à savoir un contrôle de la taille et de la position des évidements dans la fibre optique en fonction de la longueur de fibre étirée.

Sans régulation, les variations de pression dans les évidements ne permettent pas de contrôler la taille des évidements sur des longueurs supérieures à quelques dizaines de mètres (ce qui est très largement insuffisant compte tenu des longueurs potentielles étirables à partir d'une même préforme) lorsque la préforme est obturée à ses deux extrémités.

A l'inverse, si les évidements sont débouchants (à la pression atmosphérique) la structure s'effondre au passage dans le four de fibrage.

Selon l'invention, pour obtenir l'homogénéité de la structure de préforme usinée et manchonnée, celle-ci est maintenue au niveau supérieur par un système qui permet de contrôler la pression interne au cours du fibrage.

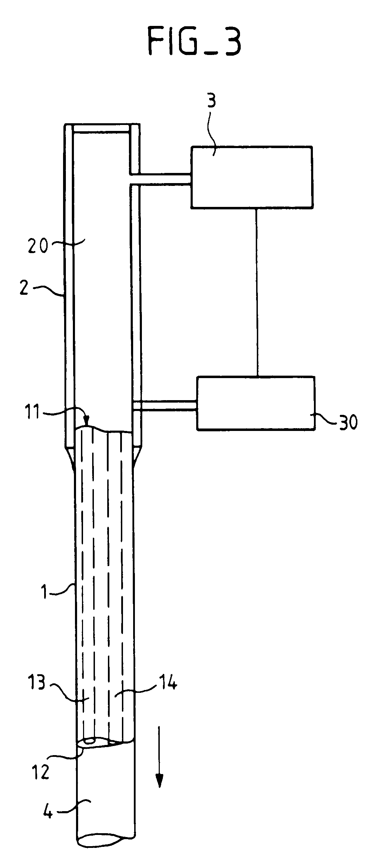

La figure 3 représente un arrangement permettant de mettre en oeuvre l'invention. Il comporte une enceinte 2 fixée de façon étanche à la partie supérieure 11 de la préforme 1. La cavité 20 de l'enceinte communique avec les évidements 13 et 14 de la préforme ainsi qu'avec un système d'admission de gaz et de régulation de pression 3.

Le système de régulation de pression est obtenu par un flux gazeux (gaz neutre de préférence, par exemple de l'argon, pour éviter toute pollution par réaction chimique) injecté dans l'enceinte et régulé par l'intermédiaire d'un manomètre 30.

Suivant un exemple de réalisation, l'enceinte 2 est réalisée à partir d'un tube soudé à la partie supérieure de la préforme. La partie supérieure du tube 2 est fermée, et sert de maintien au niveau de l'équipage de descente de la préforme au même titre que le barreau de silice usuellement utilisé pour toute opération de fibrage classique. L'enceinte 2 est ainsi soudée à la préforme. Sur la paroi latérale du tube de l'enceinte 2 est branché le système d'injection de gaz et de contrôle de la pression 3 et du manomètre 30 permettant de réguler le fonctionnement du système 3. Comme cela est représenté sur la figure 3, une pièce 4, appelée amorce, est fixée à l'extrémité 12 de la préforme pour permettre l'étirage de la préforme au début de l'opération d'étirage. Cette amorce est de même diamètre extérieur que la préforme, en matériau similaire et bouche les évidements 13 et 14 à l'extrémité 12.

A titre d'exemple de procédé, une légère surpression (équivalente à une hauteur d'eau de quelques dizaines de millimètres) est suffisante pour contrôler la structure de la fibre, au niveau des évidements d'une part et au niveau de la recircularisation de la structure. Ce phénomène de recircularisation est connu et utilisé pour la réalisation de certains types de fibres spécifiques à maintien de polarisation (il prend en compte les paramètres tels que la température, la tension et la vitesse de fibrage).

Ce type de fibre à structure évidée présente une biréfringence intrinsèque liée à la structure disymétrique. La valeur de la biréfringence est liée aux contraintes et aux déformations du coeur de guidage. Le contrôle de l'homogénéité de la structure est donc essentiel pour contrôler la biréfringence de la fibre. Ce paramètre est très important, voire essentiel pour les applications propres aux capteurs à fibres optiques. Rappelons que ce type de fibre optique est particulièrement bien adapté aux mesures de pressions statiques ou dynamiques.

La dimension des évidements est ajustée en fonction de la pression appliquée. L'asservissement de la pression au cours du fibrage permet d'obtenir des longueurs de fibre de plusieurs centaines de mètres (longueur limitée par la longueur de la préforme) présentant une parfaite uniformité du diamètre des évidements.

Le mode de réalisation est indiqué à titre d'exemple non limitatif. En effet toute la partie de contrôle de pression est située au-dessus du four de fibrage, dans une zone à température ambiante. A ce niveau, l'utilisation de matériaux métalliques ou autre pour réaliser le système n'est pas à proscrire.

A partir d'une préforme à structure évidée telle que celle décrite ci-dessus, l'invention concerne également un procédé de fabrication pour obtenir une fibre optique monomode possédant de part et d'autre du coeur de guidage deux éléments conducteurs.

Il est important de préciser que les conducteurs électriques sont placés à l'intérieur de la fibre optique.

La méthode de réalisation consiste à utiliser l'équipage de contrôle de pression décrit précédemment, modifié de telle sorte qu'il puisse recevoir dans l'enceinte de régulation de pression, un sous-ensemble permettant de dévider par entraînement deux fils métalliques préalablement introduits dans les évidements de la préforme.

Compte tenu de la haute température de fibrage nécessaire pour les fibres optiques à base de silice, on choisira des métaux dont le point de fusion est largement supérieur à la température de fibrage.

Pour fixer les idées, la température de fibrage est située entre 1500 et 1800 °C (suivant les constituants de la fibre ...), des fils en tungstène, tantale, molybdène ... peuvent être utilisés.

D'une manière générale, on pourra utiliser tout matériau conducteur résistant à une température de l'ordre de 2000° C, et filable en petits diamètres de l'ordre de 5 à 25 micromètres.

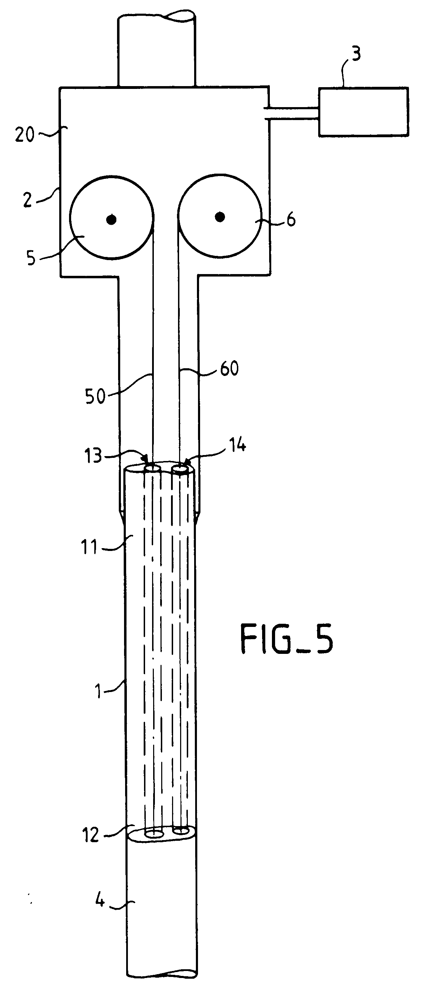

Le schéma de la figure 5 illustre un dispositif permettant de mettre en oeuvre l'invention.

Les détails relatifs au sous système de dévidement ne sont pas décrits, ceux-ci ne modifiant pas la nature première de l'invention.

Sur la base des dimensions usuelles des fibres optiques à base de silice par exemple un diamètre extérieur de 125 micromètres des évidements dont le diamètre est de l'ordre de vingt à quarante micromètres sont réalisables, les fils conducteurs peuvent être "libres" à l'intérieur des évidements.

Le dispositif de la figure 5 comporte dans l'enceinte 2, deux bobines de fil 5 et 6.

Comme cela a été décrit précédemment, la préforme 1 est fixée de façon étanche par son extrémité 11 à l'enceinte 2. La cavité 20 de l'enceinte et les évidements 13, 14 sont régulés en pression par le dispositif 3.

Les fils 50 et 60 des bobines sont enfilés dans les évidemment 13 et 14 de la préforme 1 et ont leur extrémité libre fixée à l'extrémité 12 de la préforme. Selon la figure 5, les extrémités des fils sont fixées à l'amorce 4 qui sert à obturer les évidements 13 et 14 et à entraîner la préforme au début de l'opération de fibrage.

La descente par gravité du barreau d'amorçage entraîne les fils métalliques 50, 60 avec la fibre optique. Au cours du fibrage les systèmes d'asservissement usuels sont mis en fonctionnement, ainsi que le système de contrôle de pression. Les bobines de fils métalliques sont montées sur des axes de rotation pour permettre un dévidage sans tension et éviter la rupture des fils en cours de procédé. Des moteurs "sans couple" peuvent être adjoints pour un meilleur contrôle du dévidage.

De façon usuelle, les sections droites de la préforme et de la fibre obtenue sont de formes circulaires. Les évidements sont également de forme circulaire. Cependant, tant la préforme que la fibre obtenue, ainsi que les évidements, peuvent être de toute autre forme, elliptique notamment.

## Revendications

1. Procédé de réalisation de fibre optique creuse comportant les étapes suivantes :
- une étape de réalisation d'une préforme (1) possédant un axe de symétrie, deux extrémités (11, 12), un coeur optique (10) ainsi qu'au moins un évidement (13, 14) dont l'axe est parallèle à l'axe de symétrie de la préforme ;
- une étape d'étirage à une température permettant le ramollissement de la partie étirée de la préforme, de façon à obtenir une fibre optique creuse .
- une étape de fixation de manière étanche, à une extrémité (11) de la préforme (1), d'une enceinte creuse (2) dont la cavité (20) communique avec l'évidement de la préforme, ladite cavité (20) communique également avec un dispositif de régulation pneumatique ;
- l'étape d'étirage comportant une régulation pneumatique du gaz contenu dans la cavité (20) et dans l'évidement à l'aide du dispositif de régulation pneumatique (3) ;
caractérisé en ce qu'il comporte également une étape de fixation, à l'autre extrémité (12) de la préforme, d'une amorce (4) en matériau de même température de fusion que la préforme et obturant à cette extrémité l'évidement cylindrique (13, 14), le dispositif de régulation pneumatique (3) étant un dispositif de régulation de pression, la régulation pneumatique étant alors une régulation de la pression du gaz contenu dans la cavité (20) et dans l'évidement (13, 14) à l'aide du dispositif de régulation de pression.

2. Procédé selon la revendication 1, caractérisé en ce que la cavité (20) de l'enceinte (2) contient au moins une bobine (5, 6) de fil (50, 60) pour chaque évidement (13, 14) de la préforme, le fil d'une bobine étant placé selon l'axe d'un évidement (30, 40) et fixé par une extrémité à l'amorce (4).

3. Procédé selon la revendication 1, caractérisé en ce que l'enceinte (2) est soudée à la préforme.

4. Procédé selon la revendication 1, caractérisé en ce que la préforme comporte deux évidements situés de part et d'autre du coeur optique de la préforme.

5. Procédé selon la revendication 2, caractérisé en ce que le fil (50, 60) est en matériau métallique de température de fusion supérieure à la température de fusion de la préforme.

## Claims

1. Process for producing a hollow optical fibre, including the following steps:
- a step of producing a preform (1) having an axis of symmetry, two ends (11, 12), an optical core (10) as well as at least one recess (13, 14) whose axis is parallel to the axis of symmetry of the preform;
- a step of drawing at a temperature allowing softening of the drawn part of the preform, so as to obtain a hollow optical fibre;
- a step of fastening a hollow enclosure (2) in a leaktight manner to one end (11) of the preform (1), the cavity (20) of which enclosure communicates with the recess of the preform, the said cavity (20) also communicating with a pneumatic regulation device;
- the drawing step including a pneumatic regulation of the gas contained in the cavity (20) and in the recess, with the aid of the pneumatic regulation device (3);
characterized in that it also includes a step of fastening, to the other end (12) of the preform, a pigtail (4) made of material with the same melting temperature as the preform and closing off the cylindrical recess (13, 14) at this end, the pneumatic regulation device (3) being a pressure regulation device, the pneumatic regulation then being a regulation of the pressure of the gas contained in the cavity (20) and in the recess (13, 14) with the aid of the pressure regulation device.

2. Process according to Claim 1, characterized in that the cavity (20) of the enclosure (2) contains at least one spool (5, 6) of filament (50, 60) for each recess (13, 14) of the preform, the filament of one spool being placed along the axis of a recess (30, 40) and fastened by one end to the pigtail (4).

3. Process according to Claim 1, characterized in that the enclosure (2) is welded to the preform.

4. Process according to Claim 1, characterized in that the preform includes two recesses located on either side of the optical core of the preform.

5. Process according to Claim 2, characterized in that the filament (50, 60) is made of metallic material with melting temperature greater than the melting temperature of the preform.

## Patentansprüche

1. Verfahren zum Herstellen einer hohlen Lichtleitfaser, enthaltend die folgenden Schritte:
- einen Schritt zur Herstellung eines Vorformteils (1) mit einer Symmetrieachse, zwei Enden (11, 12), einem optischen Kern (10), sowie wenigstens einer Ausnehmung (13, 14), deren Achse parallel zur Symmetrieachse des Vorformteils verläuft;
- einen Schritt des Ziehens bei einer Temperatur, die das Plastifizieren des gezogenen Abschnittes des Vorformteils ermöglicht, so daß eine hohle Lichtleitfaser erhalten wird;
- einen Schritt zum dichten Befestigen einer hohlen Kammer (2) an einem Ende (11) des Vorformteils (1), deren Hohlraum (20) mit der Ausnehmung des Vorformteils in Verbindung steht, wobei der Hohlraum (20) außerdem mit einer pneumatischen Regelvorrichtung in Verbindung steht;
- wobei der Schritt des Ziehens eine pneumatische Regelung des in dem Hohlraum (20) und in der Ausnehmung enthaltenen Gases mit Hilfe einer pneumatischen Regelvorrichtung (3) umfaßt;
- dadurch gekennzeichnet, daß es ferner einen Schritt des Befestigens eines Ansatzstücks (4) aus einem Material mit der gleichen Schmelztemperatur wie das Vorformteil an dem anderen Ende (12) des Vorformteils umfaßt, wobei dieses Ansatzstück an diesem Ende die zylindrische Ausnehmung (13, 14) verschließt, wobei die pneumatische Regelvorrichtung (3) eine Druckregelvorrichtung ist und die pneumatische Regelung somit eine Druckregelung des in den Hohlraum (20) und in der Ausnehmung (13, 14) enthaltenen Gases mittels der Druckregelvorrichtung ist.

2. Verfahren nach Anspruch 1, dadurch gekennzeichnet, daß der Hohlraum (20) der Kammer (2) wenigstens eine Spule (5, 6) aus Draht (50, 60) für jede Ausnehmung (13, 14) des Vorformteiles enthält, wobei der Draht einer Spule längs der Achse einer Ausnehmung (13, 14) angeordnet ist und mit einem Ende am Ansatzstück (4) befestigt ist.

3. Verfahren nach Anspruch 1, dadurch gekennzeichnet, daß die Kammer (2) mit dem Vorformteil verschweißt ist.

4. Verfahren nach Anspruch 1, dadurch gekennzeichnet, daß das Vorformteil zwei Ausnehmungen aufweist, die beiderseits des optischen Kerns des Vorformteils liegen.

5. Verfahren nach Anspruch 2, dadurch gekennzeichnet, daß der Draht (50, 60) aus einem metallischen Material mit einer Schmelztemperatur besteht, die größer als die Schmelztemperatur des Vorformteils ist.
